(19) Europäisches Patentamt
European Patent Office
Office européen des brevets

(11) EP 0 623 463 B1

(12) **EUROPÄISCHE PATENTSCHRIFT**

(45) Veröffentlichungstag und Bekanntmachung des Hinweises auf die Patenterteilung:
**07.07.1999 Patentblatt 1999/27**

(51) Int. Cl.[6]: **B32B 27/32**, B32B 27/20, B65D 65/40

(21) Anmeldenummer: **94106640.9**

(22) Anmeldetag: **28.04.1994**

(54) **Siegelbare, opake, biaxial orientierte Polypropylen-Mehrschichtfolie, Verfahren zu ihrer Herstellung und ihre Verwendung**

Opaque, sealable, biaxially oriented polypropylene multilayered film, process for its manufacture and its use

Film multicouche thermosoudable et biaxiallement orienté en polypropylène, procédé pour sa préparation et son utilisation

(84) Benannte Vertragsstaaten:
**BE DE ES FR GB IT NL**

(30) Priorität: **06.05.1993 DE 4315006**

(43) Veröffentlichungstag der Anmeldung:
**09.11.1994 Patentblatt 1994/45**

(73) Patentinhaber:
**Hoechst Trespaphan GmbH**
**66539 Neunkirchen (DE)**

(72) Erfinder:
- **Schuhmann, Detlef Erich, Dr.**
  **D-65399 Kiedrich (DE)**
- **Dries, Thomas, Dr.**
  **D-55270 Schwabenheim (DE)**
- **Wilhelm, Adolf**
  **D-65199 Wiesbaden (DE)**
- **Scheidecker, Dieter**
  **D-65343 Eltville (DE)**
- **Lohmann, Harald**
  **D-66539 Neunkirchen (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 143 567**
**EP-A- 0 408 971**
**EP-A- 0 463 517**
**EP-A- 0 514 098**
**EP-A- 0 515 969**
**EP-A- 0 517 109**
**EP-A- 0 612 613**
**DE-A- 3 247 999**
**DE-U- 8 710 305**

EP 0 623 463 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine siegelbare, opake, biaxial orientierte Polypropylen-Mehrschichtfolie aus einer Kernschicht und mindestens einer darauf angeordneten Zwischenschicht und mindestens einer auf der Zwischenschicht angeordneten Deckschicht.

Die Kernschicht enthält im wesentlichen ein Polypropylen oder eine Polypropylenmischung und Füllstoffe. Die Zwischenschicht/en enthält/enthalten im wesentlichen ein Polypropylen oder eine Polypropylenmischung und Pigment. Die Deckschicht/en enthält/enthalten im wesentlichen Co- und/oder Terpolymere aus $\alpha$-Olefinen mit 2 bis 10 Kohlenstoffatomen oder siegelfähige Homopolymere.

Die Erfindung betrifft ferner ein Verfahren zur Herstellung der Mehrschichtfolie sowie ihre Verwendung.

Opake Folien sind allgemein bekannt. So wird beispielsweise in der EP-A-0 180 087 eine fünfschichtige siegelfähige Folie beschrieben, die eine vakuolenhaltige Basisschicht, hergestellt aus Propylenhomopolymer und Calciumcarbonat, aufweist, eine Zwischenschicht aus Propylenhomopolymer und Kohlenwasserstoffharz hat und deren siegelfähige Deckschichten aus Propylen/Ethylen-Copolymeren bestehen.

Bedingt durch die dicke Zwischenschicht aus Polypropylen und Kohlenwasserstoffharz weist die Folie bessere mechanische Eigenschaften sowie einen höheren Glanz auf als Folien nach dem Stand der Technik. Daneben ist die Folie infolge der aufgeprägten Siegelschichten aus Propylen/Ethylen-Copolymeren gut coronabehandelbar. Verbesserungswürdig ist die Folie im Glanz und im Weißgrad bzw. in der Opazität.

Aus der EP-A-0 312 226 ist eine mehrschichtige opake Folie bekannt, bei der eine Deckschicht aus einem gut bedruckbaren Polymer besteht, die eine Zwischenschicht aus Propylenhomopolmeren aufweist und eine Kernschicht hat, die vakuolenhaltig ist. Die Folie soll sich - gesehen von der Homopolymerseite aus - durch einen guten Glanz auszeichnen. Bedingt durch die angegebenen Schichtdickenverhältnisse ist - ähnlich wie in EP-A-0 180 087 - der Oberflächenglanz und die Opazität bzw. der Weißgrad verbesserungswürdig.

In der EP-A-0 408 971 wird eine Folie mit hohem Weißgrad und hoher Opazität beschrieben, die gut bedruckbar ist und glänzend sein soll. Auch hier ist aufgrund der hohen Deckschichtdicke der Glanz verbesserungswürdig. Die Folie kann eine wolkige Struktur aufweisen, die wahrscheinlich von der kleinen Korngröße des verwendeten Calciumcarbonats herrührt. Die bevorzugt angegebene Teilchengröße von 1,0 µm hat eine schlechte Dispergierbarkeit im Polymeren zur Folge. Außerdem führt der erhöhte Feinanteil der Körner zu einer verringerten Opazität, da hierdurch keine Vakuolen entstehen.

Allen vorstehend angegebenen bekannten opaken Folien haftet insbesondere der Nachteil an, daß sie sehr schlechte antistatische Eigenschaften und eine sehr schlechte Entstapelbarkeit aufweisen. Opake Folien finden neben ihrer üblichen Verwendung als Verpackungsfolie auch Anwendung als Etikettenmaterial. Hierzu wird die Folie in Zuschnitte geeigneter Größe geschnitten und übereinandergestapelt. Beim Etikettierprozeß wird der einzelne Folienzuschnitt diesem Stapel maschinell entnommen und in den Etikettierprozeß geführt. Bei herkömmlichen opaken Folien kommt es bei diesem maschinellen Entstapelungsvorgang häufig zu Problemen, wenn die Maschine häufig mehr als ein Blatt greift. Weiterhin weisen die herkömmlichen opaken Folien eine sehr schlechte Antistatik auf, was zum einen zu Verunreinigungen der Oberfläche durch Staubansammlungen führt, aber auch aufgrund der großen Oberfläche der Folie bei extremer Aufladung eine Gefahrenquelle darstellt, z. B. durch plötzliche Entladungen in einem Druckwerk, die bis hin zu Explosionen von Lösungsmitteln führen können.

Die bekannte Ausrüstung der Basisschicht mit Antistatika verbessert die antistatischen Eigenschaften der Folie ungenügend. Die Einarbeitung entsprechender Additive in die Deckschicht führt beim Produktionsprozeß durch Ausdampfungen zu Problemen. Die Substanzen lagern sich im Streckrahmen und auf den Walzen ab und führen so zu störenden Verunreinigungen. Außerdem enthält die Folie nicht die vorgesehene Menge an Antistatika.

Weiterhin sind bekannte Folien bezüglich ihrer antistatischen Eigenschaften nach der Bedruckung verbesserungsbedürftig. Üblicherweise werden Folien vor dem Aufbringen eines farbigen Druckbildes mit einer Grundfarbe, im allgemeinen weiß, ganzflächig bedruckt. Es hat sich gezeigt, daß diese flächenbedruckende Bedruckung der Folie zu einer erheblichen Verschlechterung der Antistatik führt, besonders bei weißen flächendeckenden Bedruckungen.

EP-A-0 612 613 (nicht vorveröffentlicht) beschreibt opake, biaxial orientierte Polypropylen-Mehrschichtfolien, umfassend eine Basisschicht, die ein Polypropylen oder eine Polypropylenmischung und Füllstoff enthält, und eine siegelfähige Deckschicht, die eine kombination von anorganischen und/oder organischen Partikeln und tertiärem aliphatischem Amin einer Formel I enthält.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die sehr gut bedruckbar ist, eine sehr gute Antistatik, gute Weiterverarbeitungseigenschaften und eine gute Entstapelbarkeit aufweist. Dabei sollen die guten antistatischen Eigenschaften und die guten Weiterverarbeitungseigenschaften (z.B. beim Schneiden, Wickeln, Stanzen oder ähnlichem) auch nach der Bedruckung erhaltenbleiben.

Erfindungsgemäß wird diese Aufgabe gelöst durch siegelfähige, biaxial orientierte, opake Polypropylenmehrschichtfolie, umfassend eine Basisschicht, die ein Polypropylen oder eine Polypropylenmischung und Füllstoff enthält,

wobei das Polypropylen mindestens 90 Gew.-% Propyleneinheiten enthält und einen Schmelzpunkt von mindestens 140 C hat und mindestens eine darauf angeordnete Zwischenschicht und mindestens eine auf der Zwischenschicht angeordnete siegelfähige Deckschicht, die Co- und/oder Terpolymere aus α-Olefinen mit 2 bis 10 Kohlenstoffatomen oder siegelfähige Homopolymere enthält, wobei

a) die Deckschicht 2 bis 8 Gew.-%, bezogen auf das Gewicht der Deckschicht, anorganische und/oder organische Partikel enthält und
b) die Deckschicht tertiäres aliphatisches Amin der Formel I

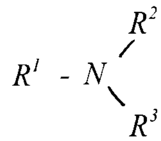

worin

$R^1$ einen Alkylrest mit mindestens 18 C-Atomen oder einen vollständig gesättigten Alkylrest mit 8 bis 26 C-Atomen bedeutet und
$R^2$ und $R^3$ identisch oder verschieden sind und $R^4$-$CH_2OH$ bedeuten, worin $R^4$ einen gesättigten $C_1$-$C_6$-Alkylrest bedeutet,

enthält und
c) die Zwischenschicht Polypropylen oder eine Polypropylenmischung und Pigment enthält,
d) wobei solche Folien ausgenommen sind bei denen die Zwischenschicht nicht von der Basisschicht unterschieden werden kann, weil die Zwischenschicht die gleiche Zusammensetzung wie die Basisschicht hat.

Die erfindungsgemäße Folie ist mindestens dreischichtig und umfaßt als wesentliche Schichten immer die Kernschicht K und zumindest eine Zwischenschicht Z und zumindest eine Deckschicht D gemäß einem Aufbau KZD. Die Wahl der Anzahl der Schichten hängt in erster Linie von dem vorgesehenen Einsatzzweck ab, wobei vier- und fünfschichtige Ausführungsformen besonders bevorzugt sind entsprechend einem Aufbau DZKZD oder einem asymmentrischen Aufbau DKZD.

Die Gesamtdicke der Folie kann innerhalb weiter Grenzen variieren und richtet sich nach dem beabsichtigten Verwendungszweck.

Die bevorzugten Ausführungsformen der erfindungsgemäßen Folie haben Gesamtdicken von 10 bis 140 μm, wobei 20 bis 120 μm, insbesondere 30 bis 100 μm, bevorzugt sind.

Die Dicke der Zwischenschicht/en beträgt jeweils unabhängig voneinander 2 bis 12 μm, wobei Zwischenschichtdicken von 3 bis 8 μm, insbesondere 3 bis 6 μm, bevorzugt sind. Die angegebenen Werte beziehen sich jeweils auf eine Zwischenschicht.

Die Deckschicht/en weist/weisen im allgemeinen eine Dicke von 0,5 bis 5 μm, vorzugsweise 0,5 bis 3 μm, auf. Besonders vorteilhaft sind Deckschichtdicken im Bereich von 0,7 bis 1,5 μm, wobei die Dicken beidseitig vorhandener Deckschichten jeweils unabhängig voneinander gewählt werden.

Die Dicke der Kernschicht ergibt sich entsprechend aus der Differenz von Gesamtdicke und der Dicke der aufgebrachten Deck- und Zwischenschicht/en und kann daher analog der Gesamtdicke innerhalb weiter Grenzen variieren.

Die Basisschicht der erfindungsgemäßen Mehrschichtfolie enthält im wesentlichen ein Propylenpolymer oder eine Polypropylenmischung und Füllstoffe.

Das Propylenpolymere der Basisschicht enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$-α-Olefinen mit einem α-Olefingehalt von 10 Gew.-% oder weniger stellen bevorzugte Propylenpolymere für die Basisschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735).

Des weiteren ist eine Mischung aus den genannten Propylenhomo- und/oder -copolymeren und/oder anderen

mit den Propylenpolymeren verträglichen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind verträgliche Polyethylene, insbesondere HDPE, LDPE und LLDPE, wobei der Anteil dieser Polyolefine jeweils 15 Gew.-%, bezogen auf die Polymermischung, nicht übersteigt. Verträglich im Sinne der vorliegenden Erfindung bedeutet, daß das verträgliche Polymere in der Folie nicht als separate Phase vorliegt.

Gegebenenfalls kann das in der Basisschicht eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids
$MFI_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Polypropylen-Basisschicht enthält Füllstoffe im allgemeinen in einer Menge von 1 bis 30 Gew.-%, welche die Folie opak machen. "Opake Folie" bedeutet im Sinne der vorliegenden Erfindung eine undurchsichtige Folie, deren Lichtdurchlässigkeit (ASTM-D 1003-77) höchstens 50 %, vorzugsweise höchstens 70 %, beträgt.

Von dem Begriff "Füllstoffe" werden im Sinne der vorliegenden Erfindung vakuoleniniziierende feste Teilchen, im folgenden "feste Teilchen" genannt, und Pigmente umfaßt. Feste Teilchen sind mit der Polymermatrix unverträglich und führen beim Verstrecken der Folien zur Bildung von vakuolenartigen Hohlräumen, wobei Größe, Art und Anzahl der Vakuolen von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben feste Teilchen eine Mindestgröße von 1 µm, um zu einer effektiven, d. h. opak machenden Menge an Vakuolen zu führen. Im allgemeinen beträgt der mittlere Teilchendurchmesser der festen Teilchen 1 bis 6 µm, vorzugsweise 1,5 bis 5 µm. Der chemische Charakter der festen Teilchen spielt eine untergeordnete Rolle.

Pigmente sind ebenfalls mit der Polymermatrix unverträglich und umfassen solche Füllstoffe, die kaum zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,5 µm.

Somit ist die Unterteilung der Füllstoffe in die beiden Gruppen "feste Teilchen" und "Pigmente" eine Klassifizierung nach ihrer Funktionalität, die u. a. von der Teilchengröße abhängig ist. Feste Teilchen machen Folien durch Vakuolenbildung opak. Pigmente färben die Folie und machen sie dadurch undurchsichtig. Beide Teilchenarten werden unter dem Oberbegriff "Füllstoffe" zusammengefaßt.

Übliche Füllstoffe der Basisschicht sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Alle Mengenangaben in der folgenden Ausführung bezüglich der Füllstoffmengen in der Basisschicht sind in Gewichtsprozent (Gew.-%) und beziehen sich auf das Gewicht der Basisschicht.

Die Füllstoffmenge der Basisschicht liegt im allgemeinen im Bereich von 1 bis 30 Gew.-%, wobei die einzelnen

Ausführungsformen je nach Einsatzzweck der Folie oder aktuellem Modetrend nur feste Teilchen oder nur Pigmente oder eine Kombination aus festen Teilchen und Pigmenten in der Basisschicht enthalten können.

Folien, welche nur mit Pigment ausgerüstet sind (pigmentierte Folien), enthalten dieses im allgemeinen in einer Menge von 2 bis 25 Gew.-%, insbesondere 3 bis 20 Gew.-%, bevorzugt 5 bis 15 Gew.-%. Als Pigmente sind Weißpigmente, insbesondere $TiO_2$ und $BaSO_4$ bevorzugt. $TiO_2$ hat bevorzugt einen mittleren Teilchendurchmesser von 0,01 bis 0,7 µm, insbesondere 0,01 bis 0,4 µm.

Folien, welche nur mit vakuoleniniziierenden festen Teilchen ausgerüstet sind, enthalten diese im allgemeinen in einer Menge von 1 bis 25 Gew.-%. Für übliche Verpackungsfolien ist ein Gehalt an festen Teilchen von 2 bis 5 Gew.-% bevorzugt. Für spezielle Anwendungen, z. B. Folien für Etiketten, werden auch hochgefüllte Folien mit 9 bis 14 Gew.-% festen Teilchen bevorzugt. Als vakuoleniniziierende Teilchen sind $CaCO_3$, $SiO_2$, Polyamide und Polybutylenterephthalate bevorzugt. Besonders vorteilhaft ist $CaCO_3$, insbesondere $CaCO_3$ einem mittleren Teilchendurchmesser von 1 bis 5 µm, vorzugsweise 2 bis 5 µm.

Für die hier vorliegende Erfindung sind Ausführungsformen mit einer hochgefüllten Basisschicht bevorzugt, wobei die Basisschicht vorteilhaft 9 bis 14 Gew.-% $CaCO_3$ mit einem mittleren Teilchendurchmesser von 1 bis 5 µm, vorzugsweise 2 bis 5 µm, enthält.

Folien, welche mit vakuoleniniziierenden festen Teilchen und mit Pigment ausgerüstet sind, enthalten feste Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%. Für solche Folientypen ist eine Kombination aus $CaCO_3$ als feste Teilchen und $TiO_2$ als Pigment bevorzugt. Dieser Folientyp wird auch als opak-weiße Folie bezeichnet.

Die Dichte der füllstoffhaltigen Folien kann innerhalb weiter Grenzen variieren und hängt von der Art und der Menge der Füllstoffe ab. Die Dichte liegt im allgemeinen im Bereich von 0,4 bis 1,1 g/cm$^3$.

Pigmentierte Folien haben eine Dichte in der Größenordnung von 0,9 g/cm$^3$ oder darüber, da die Pigmente nahezu keine dichtereduzierenden Vakuolen erzeugen, aber selbst eine höhere Dichte als Polypropylen haben können. Bevorzugt liegt die Dichte dieses Folientyps im Bereich von 0,9 bis 1,1 g/cm$^3$.

Folien, welche nur feste Teilchen enthalten, haben durch die Vakuolen eine gegenüber Polypropylen reduzierte Dichte von kleiner 0,9 g/cm$^3$. Für Verpackungsfolien mit einem herkömmlichen Gehalt an festen Teilchen von 2 bis 5 Gew.-% liegt die Dichte im Bereich von 0,7 bis 0,85 g/cm$^3$. Für Folien mit hochgefüllter Basisschicht mit einem Gehalt an festen Teilchen von 9 bis 14 Gew.-%, wie sie für die vorliegende Erfindung bevorzugt ist, liegt die Dichte im Bereich von 0,4 bis 0,7 g/cm$^3$.

Folien, welche Pigmente und feste Teilchen enthalten, insbesondere weiß-opake Folien, haben eine Dichte im Bereich von 0,6 bis 0,85 g/cm$^3$, je nach Verhältnis von Pigmentgehalt zu Gehalt an festen Teilchen.

Bevorzugte Ausführungsformen der pigmentierten Folien enthalten $TiO_2$ als Weißpigment. Ebenso ist $TiO_2$ für weiß-opake Folientypen bevorzugt. Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Weiterhin kann die Basisschicht gegebenenfalls ein Harz enthalten, dessen Anteil 1 bis 30 Gew.-%, vorzugsweise 2 bis 10 Gew.-%, bezogen auf die Basisschicht, beträgt. Der Erweichungspunkt des Harzes liegt zwischen 100 und 180 °C (gemessen nach DIN 1995-U4, entspricht ASTM E-28), vorzugsweise zwischen 130 und 160 °C. Unter den zahlreichen Harzen sind niedrigmolekulare und die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind nachstehend im Zusammenhang mit der Zwischenschicht beschrieben.

Die erfindungsgemäße Folie wird auf mindestens einer Seite der Basisschicht, gegebenenfalls auf beiden Seiten, mit einer Zwischenschicht versehen, wobei beidseitige Zwischenschichten nach ihrem Aufbau (Polymer), ihrer Zusammensetzung (Additive) und ihrer Dicke gleich oder verschieden sein können.

Diese Zwischenschicht/en enthält/enthalten im wesentlichen Polypropylen oder Polypropylenmischungen, wie sie vorstehend für die Kernschicht beschrieben wurden. Grundsätzlich können die Kernschicht und die Zwischenschicht/en aus gleichen oder verschiedenen Propylenpolymeren bzw. Mischungen aufgebaut sein. Die Schmelzflußindices der Polymeren für die Kern- und Zwischenschicht/en sollen möglichst gleich groß sein. Gegebenenfalls kann der MFI der Zwischenschicht/en etwas höher liegen, wobei eine Differenz von 20 % nicht überschritten werden soll.

In einer besonders vorteilhaften Ausführungsform werden die in der Zwischenschicht eingesetzten Polypropylenpolymeren durch den Zusatz von organischen Peroxiden in der gleichen Weise, wie vorstehend für die Basisschicht beschrieben, teilabgebaut. Der Abbaufaktor A des in der Zwischenschicht eingesetzten Polypropylenpolymeren liegt im Bereich von 3 bis 15, vorzugsweise 6 bis 10. Die Einhaltung dieses Bereichs ist für die gewünschten Glanzeigenschaften der Folie besonders günstig.

Erfindungsgemäß enthält die Zwischenschicht ein Pigment, gegebenenfalls in Verbindung mit einem Harz. Als Pigmente kommen grundsätzlich die gleichen Pigmente wie vorstehend für die Basisschicht beschrieben in Frage. $TiO_2$, $BaSO_4$, $Al_2(SO_4)_3$, $CaSO_4$ werden bevorzugt eingesetzt. Insbesondere ist das Pigment $TiO_2$ bevorzugt. Die Zwischenschicht/en enthält/enthalten Pigmente, vorzugsweise $TiO_2$, im allgemeinen in einer Menge von 4 bis 15 Gew.-%, insbesondere 5 bis 12 Gew.-%, jeweils bezogen auf die Zwischenschicht.

Die Angaben in der Beschreibung bezüglich der Pigmente in der Basisschicht gelten in gleicher Weise für die Pigmente der Zwischenschicht. Dabei können Basis- und Zwischenschicht sowohl gleiche als auch verschiedene (bezüglich Teilchen- oder Beschichtungsart oder Teilchengröße) Pigmente enthalten.

Weiterhin ist der Zusatz eines Harzes in Verbindung mit $TiO_2$ bevorzugt, dessen Anteil 1 bis 30 Gew.-%, vorzugsweise *1 bis 25 Gew.-%, insbesondere* 2 bis 10 Gew.-%, bezogen auf die Basisschicht, beträgt. Der Erweichungspunkt des Harzes liegt zwischen 100 und 180 °C (gemessen nach DIN 1995-U4, entspricht ASTM E-28), vorzugsweise 120 bis 160 °C. Unter den zahlreichen Harzen sind niedrigmolekulare und die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d.h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in den Zwischenschichten eingesetzt.

Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Neben dem erfindungsgemäßen Pigment und dem gegebenenfalls enthaltenen Harz kann die Zwischenschicht auch noch weitere übliche Additive enthalten, vorzugsweise Gleitmittel, Stabilisatoren und Neutralisationsmittel.

Die erfindungsgemäße Folie weist mindestens eine Deckschicht auf, welche auf der Zwischenschicht aufgebracht ist. Gegebenenfalls ist eine weitere Deckschicht vorhanden, welche entweder auf der Basisschicht oder auf der gegebenenfalls vorhandenen zweiten Zwischenschicht aufgebracht ist. Beidseitige Deckschichten können nach ihrem Aufbau, ihrer Zusammensetzung und ihrer Dicke gleich oder verschieden sein.

Die Deckschicht der erfindungsgemäßen Mehrschichtfolie enthält ein siegelfähiges Polymer und eine Kombination von anorganischen und/oder organischen Partikeln und tertiärem aliphatischem Amin der Formel I:

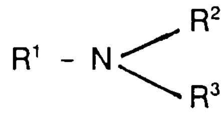

worin

$R^1$ im wesentlichen einen Alkylrest mit mindestens 18 C-Atomen oder einen im wesentlichen vollständig gesättigten Alkylrest mit 8 bis 26 C-Atomen bedeutet und

$R^2$ und $R^3$ identisch oder verschieden sind und $R^4$-$CH_2OH$ bedeuten, worin $R^4$ einen im wesentlichen gesättigten $C_1$-$C_6$-Alkylrest bedeutet.

Unter siegelfähigen Polymeren werden im Sinne der vorliegenden Erfindung

Copolymere von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

Terpolymere von

Ethylen und Propylen und Butylen oder
Ethylen und Propylen und einem anderen α-Olefin mit 5 bis 10 Kohlenstoffatomen oder

eine Mischung oder ein Blend aus zwei oder mehreren der genannten Co- und/oder Terpolymeren verstanden.

Besonders bevorzugt enthält/enthalten die Deckschicht/en

ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung oder ein Blend aus zwei oder mehreren der genannten besonders bevorzugten Co- und/oder Terpolymeren,
wobei insbesondere
statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew -%, und
einem Butylen-1-Gehalt von 3 bis 20 Gew.-%, bevorzugt 8 bis 10 Gew.-%,

bezogen auf das Gesamtgewicht des Terpolymeren, oder
eine Mischung oder ein Blend von einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,

bezogen auf das Gesamtgewicht der Polymermischung, bevorzugt sind.

Auch die vorstehend beschriebenen Deckschichtpolymeren können in analoger Weise, wie vorne für die Basisschicht beschrieben, peroxidisch abgebaut werden. Dabei werden grundsätzlich die gleichen Peroxide wie vorstehend beschrieben für den Abbau verwendet. Der Abbaufaktor A des/der Deckschichtpolymeren liegt im allgemeinen im Bereich von 3 bis 15, vorzugsweise 6 bis 10.

Als siegelfähige Polymere können grundsätzlich auch siegelfähige Homopolymere verwendet werden. Diese siegelfähigen Homopolymeren zeichnen sich durch eine besondere Struktur und völlig neue Eigenschaften gegenüber den herkömmlichen bekannten isotaktischen, nicht siegelfähigen Homopolymeren aus. Solche Materialien werden beschrieben in DE-A-42 28 812 und EP-A-0 484 816.

Es wurde überraschenderweise gefunden, daß Deckschichten, welche in Verbindung mit einem anorganischen und/oder organischen Partikel ein ausgewähltes aliphatisches Amin der Formel I enthalten, eine hervorragende Antistatik und eine sehr gute Entstapelbarkeit aufweisen.

Tertiäre aliphatische Amine sind an sich aus dem Stand der Technik bekannt. Überraschenderweise wirken jedoch nur die Amine, welche die durch die Formel I angegebene spezielle Struktur aufweisen, in der gewünschten Weise mit den anorganischen und/oder organischen Partikeln zusammen.

Es wurde gefunden, daß die übliche Verwendung von tertiären aliphatischen Aminen als Antistatika in der Basisschicht nicht die gewünschten antistatischen Eigenschaften im erforderlichen Maße bringen. Die Verwendung von Antistatika in der Deckschicht führt zu Problemen beim Produktionsprozeß, da sich das Amin in erheblichem Maße an den Walzen ablagert und sich nur ein Bruchteil der ursprünglich eingesetzten Menge in der Folie wiederfindet. Die antistatischen Eigenschaften sind unzureichend.

Überraschenderweise treten diese Probleme bei Verwendung der ausgewählten Amine gemäß Formel I nicht auf. Es kommt trotz Einarbeitung des Additivs in die Deckschicht nicht zu Ausdampfungen und Ablagerungen an den Walzen. Die Konzentration des Amins in der Deckschicht entspricht der eingesetzten Menge.

Als tertiäre aliphatische Amine der Formel I sind solche bevorzugt, worin

$R^1$ im wesentlichen einen $C_{18}$-$C_{30}$-, vorzugsweise $C_{18}$-$C_{26}$-Alkylrest, oder einen im wesentlichen hydrierten $C_{12}$-$C_{18}$-Alkylrest bedeutet und
$R^2$ und $R^3$ identisch oder verschieden sind und $R^4$-$CH_2OH$ bedeuten, worin $R^4$ einen im wesentlichen gesättigten $C_1$-$C_3$-Alkylrest bedeutet.

Unter Alkylresten werden geradkettige oder verzweigte Kohlenwasserstoffreste verstanden, welche grundsätzlich gesättigt oder ungesättigt sein können.

"Im wesentlichen" bedeutet im Sinne der vorliegenden Erfindung, daß neben der angegebenen Bedeutung für den Rest $R^1$ auch geringe Mengen, d. h. unter 10 %, bezogen auf die Gesamtmenge Amin, andere, insbesondere auch kürzere Kettenlängen vorliegen können; d. h. in einer bestimmten Menge an tertiärem aliphatischem Amin liegt eine Kettenlängenverteilung für die Alkylreste der einzelnen Substituenten vor, so daß z. B. neben $C_{18}$-Alkylresten für $R^1$ auch geringe Mengen $C_{16}$ oder $C_{14}$ für $R^1$ gefunden werden können.

"Im wesentlichen gesättigt" bzw. "im wesentlichen hydriert" bedeutet im Sinne der vorliegenden Erfindung, daß der Sättigungsgrad der Alkylreste mindestens 90 %, bevorzugt über 95 %, beträgt.

Als ganz besonders effektiv für die vorliegende Erfindung haben sich tertiäre aliphatische Amine der Formel I erwiesen, worin

$R^1$ im wesentlichen $C_{18}$-$C_{20}$-Alkyl, vorzugsweise $C_{18}$-Alkyl, bedeutet und
$R^2$ und $R^3$ im wesentlichen $CH_2$-$CH_2OH$ bedeuten,
und solche Amine der Formel I, worin
$R^1$ 55 bis 65 % $C_{18}$-Akyl

30 bis 40 % $C_{16}$-Alkyl
0 bis 5 % $C_{14}$-Alkyl
0 bis 1 % $C_{12}$-Alkyl
bedeutet, wobei alle Alkylreste im wesentlichen gesättigt sind, und worin
$R^2$ und $R^3$ $CH_2$-$CH_2OH$ bedeuten.

Es ist erfindungswesentlich, daß die Deckschicht/en weiterhin anorganische und/oder organische Partikel in Verbindung mit dem/den tertiären aliphatischen Amin/en enthält/enthalten.

Unter Partikeln im Sinne der Erfindung werden Teilchen verstanden, welche mit dem Deckschichtpolymeren unverträglich sind und unbeeinflußt vom Folienherstellungsprozeß in der Folie als separate Teilchen vorliegen.

Unter anorganischen Partikeln werden insbesondere solche verstanden, welche vorstehend als anorganische Füllstoffe für die Basisschicht beschrieben sind. Bevorzugte anorganische Partikel sind $CaCO_3$, $SO_2$, $TiO_2$, Silicate, Phosphate von Ca, Mg oder Mischungen dieser Partikel.

Die Deckschicht/en enthält/enthalten 2 bis 8 Gew.-%, bezogen auf das Gewicht der Deckschicht, an anorganischen und/oder organischen Partikeln. Bevorzugt ist ein Partikelgehalt der Deckschicht von 4 bis 6 Gew.-%. Die mittlere Teilchengröße liegt zwischen 1 bis 6 µm, insbesondere 2 bis 4 µm, wobei Teilchen mit einer kugelförmigen Gestalt bevorzugt sind. In einer ganz besonders vorteilhaften Ausführungsform der Erfindung enthalten Basis- und Deckschicht gleiche Zusatzstoffe, vorzugsweise $CaCO_3$ und/oder $TiO_2$. Dies ermöglicht die problemlose Rückführung von Folienabfall, der während der Produktion anfällt, in den Herstellungsprozeß.

Grundsätzlich kommen als Partikel für die Deckschicht auch organische Materialien in Frage, wie sie vorstehend als organische Füllstoffe für die Basisschicht beschrieben werden.

Aus dem Partikelgehalt der Deckschicht und dem Füllstoffgehalt der Basisschicht resultiert ein Gesamtgehalt an Füllstoffen von 5 bis 30 Gew.-%, bezogen auf das Gesamtgewicht der Folie. Bevorzugt enthält die Mehrschichtfolie 5 bis 25 Gew.-% Füllstoff, bezogen auf das Gesamtgewicht der Folie.

Durch die Kombination des ausgewählten tertiären aliphatischen Amins mit Partikeln für die Deckschicht konnten überraschenderweise die Entstapelbarkeit und die Antistatik der Folie wesentlich verbessert werden. Diese Funktionen spielen eine wichtige Rolle bei der Verwendung der erfindungsgemäßen Folie als Etikett.

Überraschenderweise wird durch die Modifizierung der Deckschicht mit den genannten Additiven das optische Erscheinungsbild der Folie nicht beeinträchtigt, d. h. die Folie weist trotz der enthaltenen Füllstoffe hervorragende Glanzwerte und den gewünschten dekorativen perlmuttartigen Effekt auf. Die Folie weist unerwartet trotz des relativ hohen Gehalts an Partikeln in der Deckschicht sehr gute Siegeleigenschaften auf. Dies ist insbesondere überraschend, da es bekannt ist, daß der $CaCO_3$-Zusatz in der Basisschicht beim Streckprozeß zur Vakuolenbildung führt, d. h. die Struktur der Polymermatrix wird wesentlich verändert. Die Auswirkung des Füllstoffs auf die Struktur des Deckschichtpolymeren ist noch nicht vollständig verstanden. Es wurde aber gefunden, daß die Siegelfähigkeit der Folie trotz füllstoffhaltiger Deckschicht unerwartet gut ist.

Überraschenderweise hat sich gezeigt, daß trotz des in die Deckschicht eingearbeiteten Füllstoffs die Folie nicht das von den unbeschichteten opaken Folien her bekannte "Auskreiden" zeigt. Es ist bekannt, daß einschichtige Folien, welche beispielsweise $CaCO_3$ in vergleichbaren Mengen enthalten, ohne Beschichtung der $CaCO_3$-haltigen Schicht mit der Zeit eine weiße Staubschicht aufweisen, welche aus der Folie durch abgesondertes $CaCO_3$ entsteht. Dieser Vorgang wird im allgemeinen als "Auskreiden" bezeichnet. Durch diese Absonderungen werden auch Walzen, z. B. bei der Produktion oder der Verarbeitung der Folie, kontaminiert. Es war völlig unerwartet, daß diesbezüglich bei der erfindungsgemäßen Folie keine Probleme auftreten, obwohl die "äußere" Schicht (Deckschicht) erhebliche Mengen $CaCO_3$ enthält.

Zur Verbesserung der Hafteigenschaften der Deckschicht/en ist mindestens eine Oberfläche der Folie corona- oder flammbehandelt, wobei gegebenenfalls die entsprechende Behandlung an beiden Oberflächen vorgenommen werden und gleich oder verschieden sein kann.

Um bestimmte Eigenschaften der erfindungsgemäßen Polyolefinfolie noch weiter zu verbessern, können sowohl die Basisschicht als auch die Deckschicht/en weitere Zusätze in einer jeweils wirksamen Menge enthalten, vorzugsweise Antiblockmittel und/oder Gleitmittel und/oder Stabilisatoren und/oder Neutralisationsmittel, die mit den Propylenpolymeren der Basisschicht und der Deckschicht/en verträglich sind, mit Ausnahme der Antiblockmittel, die im allgemeinen unverträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders

geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 $mm^2$/s. Besonders günstig ist der Zusatz der Polydimethylsiloxane in eine oder beide Deckschichten.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 $\mu$m, einer absoluten Teilchengröße von kleiner 10 $\mu$m und einer spezifischen Oberfläche von mindestens 40 $m^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Autwickeleinrichtung aufgewickelt.

Es hat sich als besonders günstig erwiesen, die Abzugswalze oder -walzen, durch die die ausgepreßte Folie auch abgekühlt und verfestigt wird, durch einen Heiz- und Kühlkreislauf bei einer Temperatur von 10 bis 100 °C, vorzugsweise 20 bis 80 °C, zu halten.

Die Temperaturen, bei denen Längs- und Querstreckung durchgeführt werden, können in einem relativ großen Bereich variieren und richten sich nach der jeweiligen Zusammensetzung der Deckschichtmischung und nach den gewünschten Eigenschaften der Folie bzw. der Basisschicht wie z. B. Opazität, Weißgrad, Dicke, Dichte usw. Im allgemeinen wird die Längsstreckung vorzugsweise bei 120 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen im Bereich von 37 bis 42 mN/m, vorzugsweise 39 bis 40 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Mehrschichtfolie besitzt eine Kombination von Eigenschaften, die sie in besonders hohem Maße geeignet macht für ihren bestimmungsgemäßen Verwendungszweck als opake Etikettenfolie oder als opake Einschlagfolie für schnellaufende Einschlagmaschinen.

Mit dieser Folie wird die eingangs gestellte Aufgabe nach einer verbesserten Antistatik dadurch gelöst, daß man den Weißgrad der Folie auf wirtschaftliche Weise so weit erhöht, daß man auf die flächendeckende Bedruckung mit der weißen Grundfarbe verzichten kann und zusätzlich die Folie mit einem speziellen ausgewählten Antistatikum in der Deckschicht ausrüstet. Der hohe Weißgrad wird auf wirtschaftliche Weise dadurch erzielt, daß man das $TiO_2$ in die Zwischenschicht einarbeitet. Dadurch werden wesentlich geringere Mengen Pigment benötigt, als man für einen vergleichbaren Weißgrad durch Pigment in der Basisschicht braucht. Auf diese Weise bleiben die hervorragenden antistatischen Eigenschaften bis zum Aufbringen des farbigen Druckbilds erhalten und werden aber überraschenderweise auch nach dem Bedrucken mit dem farbigen Druckbild kaum beeinträchtigt.

Darüberhinaus bietet die Folie alle wichtigen Eigenschaften, die für Verpackungsfolien gefordert werden, insbesondere gute, gleichmäßige, optische Eigenschaften, eine gute Entstapelbarkeit, geringe Dichte und hervorragende Bedruckbarkeit.

Zusammenfassend ist festzustellen, daß sich die erfindungsgemäße Mehrschichtfolie durch eine Vielzahl vorteilhafter Eigenschaften auszeichnet, insbesondere durch

- hervorragende Entstapelbarkeit,
- eine ausgezeichnete Antistatik,
- einen hohen Glanz,
- einen hohen Weißgrad (ein- oder beidseitig)
- eine hohe Opazität,
- eine homogene Folienoptik,
- gute ein- bzw. beidseitige Siegeleigenschaften,
- eine gute Oberflächenbehandelbarkeit
- gute Sofort- und Langzeitbedruckbarkeit,
- eine hohe Kratzfestigkeit beider Oberflächenschichten,
- kein Auskreiden bei füllstoffhaltiger Deckschicht.

Die Erfindung wird durch die nachfolgenden Beispiele näher erläutert:

**Beispiel 1**

Es wurde eine vierschichtige symmetrische Folie (Aufbau der Schichten: AKZD) hergestellt, wobei folgende Produktionsparameter eingehalten wurden:

| | Extrusionstemperatur |
|---|---|
| Kernschicht K | 265 °C |
| Deckschichten D | 275 °C |
| Zwischenschicht Z | 280 °C |

Es wurde eine vierschichtige Vorfolie mit einem asymmetrischen Schichtaufbau DKZD extrudiert. Diese Vorfolie wurde auf einer Kühlwalze (Temperatur der Kühlwalze: 30 °C) abgekühlt. Anschließend erfolgte die Streckung zunächst in Längs- ($\lambda_l$ = 5,5:1; T = 130 °C) und dann in Querrichtung ($\lambda_q$ = 9:1; T = 160 °C, Konvergenz: 15 %). Die Maschinengeschwindigkeit betrug ca. 210 m/min.

Die Folie hatte folgenden Aufbau:

Kernschicht K:

| | |
|---|---|
| 87,88 Gew.-% | Propylenhomopolymerisat mit einem Schmelzflußindex von 4 g/10 min (230 °C, 21,6 N) |
| 12 Gew.-% | Calciumcarbonat mit einem mittleren Teilchendurchmesser von 3,5 μm |
| 0,12 Gew.-% | N,N-bis-(hydroxyethyl-)alkylamin (Antistatikum; Armostat® 300, AKZO, Düren, DE) |

Das Calciumcarbonat wurde über ein Masterbatch (30 Gew.-% PP, 70 Gew.-% $CaCO_3$; ®Multibase 7012 A, OMYA, Köln, DE) eingesetzt.

Zwischenschicht Z:

| | |
|---|---|
| 92,91 Gew.-% | Propylenhomopolymerisat mit einem Schmelzflußindex von 4 g/10 min (230 °C; 21,6 N) |
| 7 Gew.-% | $TiO_2$ mit einem mittleren Teilchendurchmesser von 0,2 bis 0,3 μm |
| 0,09 Gew.-% | N,N-bis-(hydroxyethyl-)alkylamin (Antistatikum; Armostat® 300, AKZO, Düren, DE). |

Das $TiO_2$ wurde über ein Masterbach (55 Gew.-% $TiO_2$; 45 Gew.-% PP; ®8555 LM; Schulmann, Kerpen, DE) eingesetzt.

Deckschichten D:

| | |
|---|---|
| 94,5 Gew.-% | Ethylen-Propylen-Copolymerisat mit einem $C_2$-Gehalt von 4 %, einem Schmelzflußindex von 12 g/10 min (230 °C, 21,6 N) und einem Abbaufaktor von 8 |
| 5 Gew.-% | Calciumcarbonat mit einem mittleren Teilchendurchmesser von 3,5 μm |
| 0,5 Gew.-% | N,N-bis-(hydroxyethyl-)alkylamin der Formel I |

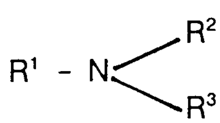

worin

| | |
|---|---|
| $R^1$ | 55 bis 65 % $C_{18}H_{35}$ |
| | 30 bis 40 % $C_{16}H_{31}$ |
| | 0 bis 5 % $C_{14}H_{27}$ |
| | 0 bis 1 % $C_{12}H_{23}$ |
| | bedeutet und worin |
| $R^2$ | $CH_2$-$CH_2OH$ und |
| $R^3$ | $CH_2CH_2OH$ |
| | bedeuten. |

| | |
|---|---|
| Dicke der Folie: | 80 μm |
| Dicke von Schicht K: | 72 μm |
| Dicke von Schicht Z: | 6 μm |
| Dicke der Deckschichten D: | 1 μm |

Eine Deckschicht wurde mit 41 mN/m coronabehandelt. Die Folie hat die in der Tabelle genannten erfindungsgemäßen Eigenschaften.

**Beispiel 2**

Es wurde eine Vierschichtfolie gemäß Beispiel 1 hergestellt, wobei jedoch eine der beiden Deckschichten D kein $CaCO_3$ enthielt.

**Beispiel 3**

Es wurde eine Vierschichtfolie gemäß Beispiel 1 hergestellt, wobei jedoch eine der beiden Deckschichten D kein Antistatikum und kein $CaCO_3$ enthielt.

**Beispiel 4**

Es wurde eine Vierschichtfolie gemäß Beispiel 1 hergestellt, wobei jedoch in der Deckschicht anstelle des Amins der Formel I gemäß Beispiel 1 ein N,N-bis-(hydroxyethyl)-oleylamin in einer Menge von 0,5 Gew.-% eingesetzt wurde.

**Vergleichsbeispiel 1**

Es wurde eine Vierschichtfolie gemäß Beispiel 1 hergestellt, wobei jedoch in der Deckschicht anstelle eines Amins der Formel I gemäß Beispiel 1 ein nicht hydriertes N,N-bis-(hydroxyethyl)-alkylamin (Armostat®300, AKZO, Düren, DE) eingesetzt wurde.

**Vergleichsbeispiel 2**

Es wurde eine Vierschichtfolie gemäß Beispiel 1 hergestellt, jedoch enthielten beide Deckschichten kein Amin.

**Vergleichsbeispiel 3**

Es wurde eine Vierschichtfolie gemäß Beispiel 1 hergestellt, jedoch enthielten beide Deckschichten kein $CaCO_3$.

**Vergleichsbeispiel 4**

Es wurde eine Vierschichtfolie gemäß Beispiel 1 hergestellt, jedoch enthielt die Deckschicht anstelle der Copolymeren ein PP-Homopolymer.
Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte $\sigma$

Die Dichte wird nach DIN 53 479, Verfahren A, bestimmt.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 $N/cm^2$ (Gerät: Brugger Typ NDS, einseitig beheizte Siegelbacke) versiegelt. Die Siegelnahtfestigkeit wurde nach der T-Peel-Methode bestimmt.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Wasserdampfbarriere

Die Wasserdampfbarriere wird in Anlehnung an DIN 53 122 bei 23 °C und 85 % relativer Luftfeuchte gemessen und gibt die pro Quadratmeter und Tag durchgetretene Wassermenge in Gramm an.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Lichtdurchlässigkeit

Die Lichtdurchlässigkeit wird in Anlehnung an ASTM-D 1003-77 gemessen.
In den nachstehenden Tabellen 1 und 2 sind die Eigenschaften und der Aufbau der Polypropylen-Mehrschichtfolien der Beispiele zusammengefaßt.

Tabelle 1

| Beispiel | Basisschicht | Zwischenschicht | Deckschicht A-Seite | Deckschicht D-Seite |
|---|---|---|---|---|
| B1 | 87,88 Gew.-% PP, 12 Gew.-% $CaCO_3$, 0,12 Gew.-% Armostat 300 | 92,91 Gew.-% PP, 7 Gew-% $TiO_2$, 0,09 Gew.-% Armostat 300 | 94,5 Gew.-% Copolymer, 5 Gew.-% $CoCO_3$, 0,5 Gew.-% N,N-bis-(hydroxyethyl-alkylamin gemäß Formel I | 94,5 Gew.-% Copolymer, 5 Gew.-% $CaCO_3$, 0,5 Gew.-% N,N-bis-(hydroxyethyl)alkylamin gemäß Formel I |
| B2 | wie bei B1 | wie bei B1 | wie bei B1 | 99,5 Gew.-% Copolymer, 0,5 Gew.-% N,N-bis-(hydroxyethyl)alkylamin gemäß Formel I |
| B3 | wie bei B1 | wie bei B1 | wie bei B1 | 100 Gew.-% Copolymer |
| B4 | wie bei B1 | wie bei B1 | 94,5 Gew.-% Copolymer, 5 Gew.-% $CaCO_3$, 0,5 Gew.-% N,N-bis-(hydroxyethyl)oleylamin | 94,5 Gew.-% Copolymer, 5 Gew.-% $CaCO_3$, 0,5 Gew.-% N,N-bis-(hydroxyethyl)-oleylamin |
| VB1 | wie bei B1 | wie bei B1 | 94,5 Gew.-% Copolymer, 5 Gew.-% $CaCO_3$, 0,5 Gew.-% nicht hydriertes N,N-bis-(hydroxyethyl)-alkylamin Armostat® 300) | 94,5 Gew.-% Copolymer, 5 Gew.-% $CaCO_3$, 0,5 Gew.-% nicht hydriertes N,N-bis-(hydroxyethyl)-alkylamin (Armostat® 300) |
| VB2 | wie bei B1 | wie bei B1 | 95 Gew.-% Copolymer, 5 Gew.-% $CaCO_3$ | 95 Gew.-% Copolymer, 5 Gew.-% $CaCO_3$ |
| VB3 | wie bei B1 | wie bei B1 | 99,5 Gew.-% Copolymer, 5 Gew.-% N,N-bis-(hydroxyethyl)-alkylamin gemäß Formel I | 99,5 Gew.-% Copolymer, 0,5 Gew.-% N,N-bis-(hydroxyethyl)-alkylamin gemäß Formel I |
| VB4 | wie bei B1 | wie bei B1 | 94,5 Gew.-% PP, 5 Gew.-% $CoCO_3$, 0,5 Gew.-% N,N-bis-(hydroxyethyl)-alkylamin gemäß Formel I | 94,5 Gew.-% PP, 5 Gew.-% $CaCO_3$, 0,5 Gew.-% N,N-bis-(hydroxyethyl)-alkylamin gemäß Formel I |

Tabelle 2

| Beispiele | Entstapelbarkeit | Oberflächenwiderstand | Auskreiden | Siegelfähigkeit |
|---|---|---|---|---|
| Beispiel 1 | ++ | ++ | ++ | + |
| Beispiel 2 | + | ++ | ++ | + |
| Beispiel 3 | + | + | ++ | + |
| Beispiel 4 | ++ | ++ | ++ | + |
| Vergleichsbeispiel 1 | 0 | - | ++ | + |
| Vergleichsbeispiel 2 | 0 | -- | ++ | + |
| Vergleichsbeispiel 3 | -- | + | ++ | + |
| Vergleichsbeispiel 4 | - | ++ | -- | -- |

++ = sehr gut
+ = gut
0 = mäßig
- = schlecht
-- = sehr schlecht

## Patentansprüche

1. Siegelfähige, biaxial orientierte, opake Polypropylenmehrschichtfolie, umfassend eine Basisschicht, die ein Polypropylen oder eine Polypropylenmischung und Füllstoff enthält, wobei das Polypropylen mindestens 90 Gew.-% Propyleneinheiten enthält und einen Schmelzpunkt von mindestens 140 C hat und mindestens eine darauf angeordnete Zwischenschicht und mindestens eine auf der Zwischenschicht angeordnete siegelfähige Deckschicht, die Co- und/oder Terpolymere aus $\alpha$-Olefinen mit 2 bis 10 Kohlenstoffatomen oder siegelfähige Homopolymere enthält, dadurch gekennzeichnet, daß

   a) die Deckschicht 2 bis 8 Gew.-%, bezogen auf das Gewicht der Deckschicht, anorganische und/oder organische Partikel enthält und
   b) die Deckschicht tertiäres aliphatisches Amin der Formel I

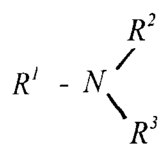

   worin

   | | |
   |---|---|
   | $R^1$ | einen Alkylrest mit mindestens 18 C-Atomen oder einen vollständig gesättigten Alkylrest mit 8 bis 26 C-Atomen bedeutet und |
   | $R^2$ und $R^3$ | identisch oder verschieden sind und $R^4$-$CH_2OH$ bedeuten, worin $R^4$ einen gesättigten $C_1$-$C_6$-Alkylrest bedeutet, |

   enthält und
   c) die Zwischenschicht Polypropylen oder eine Polypropylenmischung und Pigment enthält,
   d) wobei solche Folien ausgenommen sind bei denen die Zwischenschicht nicht von der Basisschicht unterschieden werden kann, weil die Zwischenschicht die gleiche Zusammensetzung wie die Basisschicht hat.

2. Siegelfähige Folie nach Anspruch 1, dadurch gekennzeichnet, daß die Deckschicht 0,05 bis 2 Gew.-% tertiäres aliphatisches Amin der Formel I enthält.

3. Siegelfähige Folie nach einem oder mehreren der Anspruch 1 und/oder 2, dadurch gekennzeichnet, daß die Deckschicht anorganische Partikel einer Teilchengröße von 2 bis 5 µm enthält.

4. Siegelfähige Folie nach einem oder mehreren der Ansprüche 1 bis 3, dadurch gekennzeichnet, daß die Deckschicht $CaCO_3$ enthält.

5. Siegelfähige Folie nach einem oder mehreren der Ansprüche 1 bis 4, dadurch gekennzeichnet, daß der Füllstoff der Basisschicht die gleiche Verbindung wie die anorganischen und/oder organischen Partikel der Deckschicht ist.

6. Siegelfähige Folie nach einem oder mehreren der Ansprüche 1 bis 5, dadurch gekennzeichnet, daµ die Dicke der Deckschicht 0,5 bis 2 µm beträgt.

7. Polypropylen-Mehrschichtfolie nach einem oder mehreren der Ansprüche 1 bis 6, dadurch gekennzeichnet, daß das Propylenpolymere der Basisschicht einen Schmelzflußindex im Bereich von 0,5 bis 8 g/10 min hat.

8. Polypropylen-Mehrschichtfolie nach einem oder mehreren der Ansprüche 1 bis 7, dadurch gekennzeichnet, daß die Basisschicht als Füllstoffe vakuoleniniziierende feste Teilchen und/oder Pigmente enthält.

9. Polypropylen-Mehrschichtfolie nach einem oder mehreren der Ansprüche 1 bis 8, dadurch gekennzeichnet, daß die festen Teilchen einen mittleren Teilchendurchmesser von ≥1 µm und die Pigmente einen mittleren Teilchendurchmesser von < 1 µm aufweisen.

10. Polypropylen-Mehrschichtfolie nach einem oder mehreren der Ansprüche 1 bis 9, dadurch gekennzeichnet, daß die festen Teilchen $CaCO_3$ oder unverträgliche Polymere und die Pigmente $TiO_2$ sind.

11. Polypropylen-Mehrschichtfolie nach einem oder mehreren der Ansprüche 1 bis 10, dadurch gekennzeichnet, daß die Basisschicht als Füllstoffe nur Pigmente in einer Menge von 2 bis 25 Gew.-% enthält.

12. Polypropylen-Mehrschichtfolie nach einem oder mehreren der Ansprüche 1 bis 11, dadurch gekennzeichnet, daß die Basisschicht als Füllstoffe nur feste Teilchen in einer Menge von 1 bis 25 Gew.-% enthält.

13. Polypropylen-Mehrschichtfolie nach Anspruch 12, dadurch gekennzeichnet, daß die festen Teilchen in der Basisschicht einer Menge von 2 bis 5 Gew.-% enthalten sind.

14. Polypropylen-Mehrschichtfolie nach Anspruch 12, dadurch gekennzeichnet, daß in der Basisschicht $CaCO_3$ in einer Menge von 9 bis 14 Gew.-% enthalten ist.

15. Polypropylen-Mehrschichtfolie nach einem oder mehreren der Ansprüche 1 bis 10, dadurch gekennzeichnet, daß die Basisschicht als Füllstoffe feste Teilchen, in einer Menge von 1 bis 10 Gew.-% und Pigmente in einer Menge von 1 bis 7 Gew.-% enthält.

16. Polypropylen-Mehrschichtfolie nach einem oder mehreren der Ansprüche 1 bis 11, dadurch gekennzeichnet, daß die Dichte der Folie ≥0,9 $g/cm^3$ beträgt.

17. Polypropylen-Mehrschichtfolie nach einem oder mehreren der Ansprüche 1 bis 10 und 12, dadurch gekennzeichnet, daß die Dichte der Folie 0,4 bis 0,85 $g/cm^3$ beträgt.

18. Polypropylen-Mehrschichtfolie nach einem oder mehreren der Ansprüche 1 bis 10 und 13, dadurch gekennzeichnet, daß die Dichte der Folie 0,7 bis 0,85 $g/cm^3$ beträgt.

19. Polypropylen-Mehrschichtfolie nach einem oder mehreren der Ansprüche 1 bis 10 und 14, dadurch gekennzeichnet, daß die Dichte der Folie 0,4 bis 0,7 $g/cm^3$ beträgt.

20. Polypropylen-Mehrschichtfolie nach einem oder mehreren der Ansprüche 1 bis 9 und 15, dadurch gekennzeichnet, daß die Dichte der Folie 0,6 bis 0,85 $g/cm^3$ beträgt.

21. Polypropylen-Mehrschichtfolie nach einem oder mehreren der Ansprüche 1 bis 20, dadurch gekennzeichnet, daß das Propylenpolymere der Zwischenschicht einen Schmelzpunkt von mindestens 140 °C besitzt und der Schmelzflußindex im Bereich von 0,5 bis 15 g/10 min liegt.

**22.** Polypropylen-Mehrschichtfolie nach einem oder mehreren der Ansprüche 1 bis 21, dadurch gekennzeichnet, daß die Zwischenschicht Pigmente mit einem mittleren Teilchendurchmesser von < 1 µm enthält.

**23.** Polypropylen-Mehrschichtfolie nach einem oder mehreren der Ansprüche 1 bis 22, dadurch gekennzeichnet, daß die Pigmente $TiO_2$ sind.

**24.** Polypropylen-Mehrschichtfolie nach einem oder mehreren der Ansprüche 1 bis 23, dadurch gekennzeichnet, daß die Zwischenschicht nur Pigmente in einer Menge von 2 bis 25 Gew.-% enthält.

**25.** Polypropylen-Mehrschichtfolie nach einem oder mehreren der Ansprüche 1 bis 24, dadurch gekennzeichnet, daß die Zwischenschicht Pigmente und Harz enthält.

**26.** Polypropylen-Mehrschichtfolie nach einem oder mehreren der Ansprüche 1 bis 23 und 25, dadurch gekennzeichnet, daß das Harz der Zwischenschicht einen Schmelzpunkt von 100 bis 160 °C besitzt.

**27.** Polypropylen-Mehrschichtfolie nach einem oder mehreren der Ansprüche 1 bis 23, 25 und 26, dadurch gekennzeichnet, daß die Zwischenschicht Harz in einer Menge von 1 bis 25 Gew.-% enthält.

**28.** Verwendung der Mehrschichtfolie nach einem oder mehreren der Ansprüche 1 bis 27 zur Herstellung von In-Mould-Labelling-Etiketten.

**29.** Etikett, dadurch gekennzeichnet, daß es eine Polypropylenmehrschichtfolie nach einem oder mehreren der Ansprüche 1 bis 26 umfaßt.

**30.** Verfahren zur Herstellung einer Folie nach einem oder mehreren der Ansprüche 1 bis 26, wobei man die den einzelnen Schichten der Folie entsprechenden Schmelzen durch eine Flachdüse coextrudiert, die so erhaltene Folie zur Verfestigung abkühlt, die Folie biaxial streckt und thermofixiert und gegebenenfalls eine oder beide Oberflächen mittels Corona oder polarisierter Flamme behandelt.

**Claims**

**1.** A sealable, biaxially orientated opaque multi-layer polypropylene film comprising a base layer which contains a polypropylene or a polypropylene mixture and filler, the polypropylene containing at least 90% by weight propylene units and having a melting point of at least 140°C and at least one intermediate layer disposed thereon and at least one sealable top layer disposed on the intermediate layer and which contains co- and/or terpolymers consisting of α-olefins with 2 to 10 carbon atoms or sealable homopolymers, characterised in that

a) the top layer contains 2 to 8% by weight, in relation to the weight of the top layer, of inorganic and/or organic particles, and
b) the top layer contains tertiary aliphatic amine to formula I

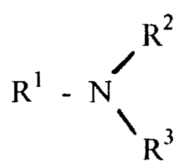

in which

| | |
|---|---|
| $R^1$ | denotes an alkyl radical with at least 18 C-atoms or a completely saturated alkyl radical with 8 to 26 C-atoms, and |
| $R^2$ and $R^3$ | are identical or different and denote $R^4$-$CH_2OH$ in which $R^4$ denotes a saturated $C_1$-$C_6$ radical, and |

c) the intermediate layer contains polypropylene or a polypropylene mixture and pigment,

d) whereby such films are excluded in which the intermediate layer cannot be different from the base layer because the intermediate layer has the same composition as the base layer.

**2.** A sealable film according to claim 1, characterised in that the top layer contains 0.05 to 2% by weight tertiary aliphatic amine to Formula 1.

**3.** A sealable film according to one or more of claims 1 and/or 2, characterised in that the top layer contains inorganic particles of a particle size of 2 to 5 μm.

**4.** A sealable film according to one or more of claims 1 to 3, characterised in that the top layer contains $CaCO_3$.

**5.** A sealable film according to one or more of claims 1 to 4, characterised in that the filler in the base layer is the same compound as the inorganic and/or organic particles of the top layer.

**6.** A sealable film according to one or more of claims 1 to 5, characterised in that the thickness of the top layer amounts to 0.5 to 2 μm.

**7.** A multi-layer polypropylene film according to one or more of claims 1 to 6, characterised in that the propylene polymer of the base layer has a melt flow index in the range from 0.5 to 8 g/10 min.

**8.** A multi-layer polypropylene film according to one or more of claims 1 to 7, characterised in that the base layer contains vacuole initiating solid particles and/or pigments.

**9.** A multi-layer polypropylene film according to one or more of claims 1 to 8, characterised in that the solid particles have a mean particle diameter of $\geq 1$ μm and the pigments have a mean particle diameter of $< 1$ μm.

**10.** A multi-layer polypropylene film according to one or more of claims 1 to 9, characterised in that the solid particles are $CaCO_3$ or incompatible polymers and the pigments are $TiO_2$.

**11.** A multi-layer polypropylene film according to one or more of claims 1 to 10, characterised in that the base layer contains as fillers only pigments in an amount of 2 to 25% by weight.

**12.** A multi-layer polypropylene film according to one or more of claims 1 to 11, characterised in that the base layer contains as fillers only solid particles in an amount of 1 to 25% by weight.

**13.** A multi-layer polypropylene film according to claim 12, characterised in that the solid particles in the base layer are contained in an amount of 2 to 5 % by weight.

**14.** A multi-layer polypropylene film according to claim 12, characterised in that $CaCO_3$ is contained in the base layer in an amount of 9 to 14% by weight.

**15.** A multi-layer polypropylene film according to one or more of claims 1 to 10, characterised in that as fillers the base layer contains solid particles in an amount of 1 to 10% by weight and pigments in a quantity of 1 to 7% by weight.

**16.** A multi-layer polypropylene film according to one or more of claims 1 to 11, characterised in that the density of the film amounts to $\geq 0.9$ g/cu.cm.

**17.** A multi-layer polypropylene film according to one or more of claims 1 to 10 and 12, characterised in that the density of the film amounts to 0.4 to 0.85 g/cu.cm.

**18.** A multi-layer polypropylene film according to one or more of claims 1 to 10 and 13, characterised in that the density of the film amounts to 0.7 to 0.85 g/cu.cm.

**19.** A multi-layer polypropylene film according to one or more of claims 1 to 10 and 14, characterised in that the density of the film amounts to 0.4 to 0.7 g/cu.cm.

**20.** A multi-layer polypropylene film according to one or more of claims 1 to 9 and 15, characterised in that the density of the film amounts to 0.6 to 0.85 g/cu.cm.

21. A multi-layer polypropylene film according to one or more of claims 1 to 20, characterised in that the propylene polymer of the intermediate layer has a melting point of at least 140°C and in that the metal flow index lies in the range from 0.5 to 15 g/10 min.

22. A multi-layer polypropylene film according to one or more of claims 1 to 21, characterised in that the intermediate layer contains pigments having a mean particle diameter of < 1 µm.

23. A multi-layer polypropylene film according to one or more of claims 1 to 22, characterised in that the pigments are $TiO_2$.

24. A multi-layer polypropylene film according to one or more of claims 1 to 23, characterised in that the intermediate layer only contains pigments in an amount of 2 to 25% by weight.

25. A multi-layer polypropylene film according to one or more of claims 1 to 24, characterised in that the intermediate layer contains pigments and resin.

26. A multi-layer polypropylene film according to one or more of claims 1 to 23 and 25, characterised in that the resin of the intermediate layer has a melting point of 100 to 160°C.

27. A multi-layer polypropylene film according to one or more of claims 1 to 23, 25 and 26, characterised in that the intermediate layer contains resin in an amount of 1 to 25% by weight.

28. Use of the multi-layer film according to one or more of claims 1 to 27 for the manufacture of in-mould labeling labels.

29. A label, characterised in that it comprises a multi-layer polypropylene film according to one or more of claims 1 to 26.

30. A method of manufacturing a film according to one or more of claims 1 to 26, whereby the melts corresponding to the individual layers of the film are coextruded through a flat-film die, the film thus obtained is cooled to solidify it, the film is biaxially stretched and heat set and possibly one or both surfaces are treated by corona or polarised flame.

**Revendications**

1. Feuille multicouche en polypropylène opaque, soumise à une orientation biaxe, apte au thermosoudage, comprenant une couche de base qui contient un polypropylène ou un mélange de polypropylènes et une matière de charge, dans laquelle le polypropylène contient des unités de propylène à concurrence d'au moins 90% en poids et possède un point de fusion d'au moins 140°C, et au moins une couche intermédiaire disposée sur la première citée, et au moins une couche de recouvrement apte au thermosoudage disposée sur la couche intermédiaire, qui contient des copolymères et/ou des terpolymères d'α-oléfines contenant de 2 à 10 atomes de carbone ou encore des homopolymères aptes au thermosoudage, caractérisée en ce que

a) la couche de recouvrement contient, à concurrence de 2 à 8% en poids rapportés au poids de la couche de recouvrement, des particules inorganiques et/ou organiques, et
b) la couche de recouvrement contient une amine aliphatique tertiaire répondant à la formule I

```
              R2
             /
    R1 - N
             \
              R3
```

dans laquelle

$R^1$ représente un radical alkyle contenant au moins 18 atomes de carbone ou un radical alkyle complètement saturé contenant de 8 à 26 atomes de carbone, et

$R^2$ et $R^3$ sont identiques ou différents et représentent un groupe $R^4$-$CH_2OH$ où $R^4$ représente un radical alkyle saturé en $C_1$-$C_6$,

et
c) la couche intermédiaire contient du polypropylène ou un mélange de polypropylène et un pigment,
d) dans laquelle sont exclues des feuilles dans lesquelles la couche intermédiaire ne peut être distinguée de la couche de base, étant donné que la couche intermédiaire possède la même composition que celle de la couche de base.

2. Feuille apte au thermosoudage selon la revendication 1, caractérisée en ce que la couche de recouvrement contient, à concurrence de 0,05 à 2% en poids, une amine aliphatique tertiaire selon la formule I.

3. Feuille apte au thermosoudage selon une ou plusieurs des revendications 1 et/ou 2, caractérisée en ce que la couche de recouvrement contient des particules inorganiques possédant une granulométrie de 2 à 5 µm.

4. Feuille apte au thermosoudage selon une ou plusieurs des revendications 1 à 3, caractérisée en ce que la couche de recouvrement contient du $CaCO_3$.

5. Feuille apte au thermosoudage selon une ou plusieurs des revendications 1 à 4, caractérisée en ce que la matière de remplissage de la couche de base représente le même composé que les particules inorganiques et/ou organiques de la couche de recouvrement.

6. Feuille apte au thermosoudage selon une ou plusieurs des revendications 1 à 5, caractérisée en ce que l'épaisseur de la couche de recouvrement s'élève de 0,5 à 2 µm.

7. Feuille multicouche en polypropylène selon une ou plusieurs des revendications 1 à 6, caractérisée en ce que le polymère de propylène de la couche de base possède un indice de fluidité à chaud dans le domaine de 0,5 à 8 g/10 min.

8. Feuille multicouche en polypropylène selon une ou plusieurs des revendications 1 à 7, caractérisée en ce que la couche de base contient, à titre de matières de remplissage, des particules solides déclenchant la formation de vacuoles et/ou des pigments.

9. Feuille multicouche en polypropylène selon une ou plusieurs des revendications 1 à 8, caractérisée en ce que les particules solides présentent un diamètre moyen de particule $\geq 1$ µm et les pigments présentent un diamètre moyen de particule $< 1$ µm.

10. Feuille multicouche en polypropylène selon une ou plusieurs des revendications 1 à 9, caractérisée en ce que les particules solides représentent du $CaCO_3$ ou des polymères incompatibles et les pigments représentent du $TiO_2$.

11. Feuille multicouche en polypropylène selon une ou plusieurs des revendications 1 à 10, caractérisée en ce que la couche de base contient, à titre de matières de remplissage, uniquement des pigments en une quantité de 2 à 25% en poids.

12. Feuille multicouche en polypropylène selon une ou plusieurs des revendications 1 à 11, caractérisée en ce que la couche de base contient, à titre de matières de remplissage, uniquement des particules solides en une quantité de 1 à 25% en poids.

13. Feuille multicouche en polypropylène selon la revendication 12, caractérisée en ce que les particules solides dans la couche de base sont contenues en une quantité de 2 à 5% en poids.

14. Feuille multicouche en polypropylène selon la revendication 12, caractérisée en ce que du $CaCO_3$ est contenu dans la couche de base en une quantité de 9 à 14% en poids.

15. Feuille multicouche en polypropylène selon une ou plusieurs des revendications 1 à 10, caractérisée en ce que la couche de base contient, à titre de matières de remplissage, des particules solides en une quantité de 1 à 10% en

poids et des pigments en une quantité de 1 à 7% en poids.

**16.** Feuille multicouche en polypropylène selon une ou plusieurs des revendications 1 à 11, caractérisée en ce que la densité de la feuille s'élève à une valeur ≥ 0,9 $g/cm^3$.

**17.** Feuille multicouche en polypropylène selon une ou plusieurs des revendications 1 à 10 et 12, caractérisée en ce que la densité de la feuille s'élève à une valeur de 0,4 à 0,85 $g/cm^3$.

**18.** Feuille multicouche en polypropylène selon une ou plusieurs des revendications 1 à 10 et 13, caractérisée en ce que la densité de la feuille s'élève à une valeur de 0,7 à 0,85 $g/cm^3$.

**19.** Feuille multicouche en polypropylène selon une ou plusieurs des revendications 1 à 10 et 14, caractérisée en ce que la densité de la feuille s'élève à une valeur de 0,4 à 0,7 $g/cm^3$.

**20.** Feuille multicouche en polypropylène selon une ou plusieurs des revendications 1 à 9 et 15, caractérisée en ce que la densité de la feuille s'élève à une valeur de 0,6 à 0,85 $g/cm^3$.

**21.** Feuille multicouche en polypropylène selon une ou plusieurs des revendications 1 à 20, caractérisée en ce que le polymère de propylène de la couche intermédiaire possède un point de fusion d'au moins 140°C et l'indice de fluidité à chaud se situe dans le domaine de 0,5 à 15 g/10 min.

**22.** Feuille multicouche en polypropylène selon une ou plusieurs des revendications 1 à 21, caractérisée en ce que la couche intermédiaire contient des pigments possédant un diamètre moyen de particule < 1 µm.

**23.** Feuille multicouche en polypropylène selon une ou plusieurs des revendications 1 à 22, caractérisée en ce que les pigments représentent du $TiO_2$.

**24.** Feuille multicouche en polypropylène selon une ou plusieurs des revendications 1 à 23, caractérisée en ce que la couche intermédiaire ne contient que des pigments en une quantité de 2 à 25% en poids.

**25.** Feuille multicouche en polypropylène selon une ou plusieurs des revendications 1 à 24, caractérisée en ce que la couche intermédiaire contient des pigments et une résine.

**26.** Feuille multicouche en polypropylène selon une ou plusieurs des revendications 1 à 23 et 25, caractérisée en ce que la résine de la couche intermédiaire possède un point de fusion de 100 à 160°C.

**27.** Feuille multicouche en polypropylène selon une ou plusieurs des revendications 1 à 23, 25 et 26, caractérisée en ce que la couche intermédiaire contient de la résine en une quantité de 1 à 25% en poids.

**28.** Utilisation de la feuille multicouche selon une ou plusieurs des revendications 1 à 27 pour la fabrication d'étiquettes pour l'étiquetage dans un moule.

**29.** Etiquette caractérisée en ce qu'elle comprend une feuille multicouche en polypropylène selon une ou plusieurs des revendications 1 à 26.

**30.** Procédé pour la fabrication d'une feuille selon une ou plusieurs des revendications 1 à 26, dans lequel on soumet les masses fondues correspondant aux couches individuelles de la feuille à une coextrusion à travers une filière pour feuille, on refroidit la feuille ainsi obtenue à des fins de consolidation, on soumet la feuille à un étirage biaxe et à un thermofixage et on traite le cas échéant une surface ou les deux surfaces à l'aide d'effluves négatives ou d'une flamme polarisée.